# EUROPÄISCHE PATENTSCHRIFT

(11) **EP 3 245 433 B1**
(45) Veröffentlichungstag und Bekanntmachung des Hinweises auf die Patenterteilung: **28.08.2019**
(21) Anmeldenummer: 15795143.5
(22) Anmeldetag: 12.11.2015
(51) Int. Cl.: F16L 19/02, B60K 15/01, F02M 55/00, F16L 19/028, B60K 15/03

(54) **VERBINDUNGSANORDNUNG ZUM AUSBILDEN EINER HYDRAULISCHEN VERBINDUNG**
CONNECTION ARRANGEMENT FOR ESTABLISHING A HYDRAULIC CONNECTION
DISPOSITIF DE LIAISON POUR FORMER UNE LIAISON HYDRAULIQUE

(30) Priorität: 12.01.2015 DE 102015200232
(43) Veröffentlichungstag der Anmeldung: 22.11.2017
(73) Patentinhaber: Robert Bosch GmbH, 70442 Stuttgart (DE)
(72) Erfinder: LANG, Klaus, 70439 Stuttgart (DE); STOCKHECKE, Volker, 71634 Ludwigsburg (DE); SCHIERHOLZ, Norbert, 71706 Markgroeningen (DE)
(86) Internationale Anmeldenummer: PCT/EP2015/076402
(87) Internationale Veröffentlichungsnummer: WO 2016/113016

(56) Entgegenhaltungen:
- EP-A1- 1 548 271
- EP-A1- 1 995 445
- DE-A1-102005 045 731
- GB-A- 2 350 410
- US-A1- 2003 025 331

## Beschreibung

### Stand der Technik

Die Erfindung betrifft eine Verbindungsanordnung zum Ausbilden einer hydraulischen Verbindung, insbesondere zum Ausbilden einer hydraulischen Verbindung an Einrichtungen für Brennkraftmaschinen.

Aus der DE 10 2007 019 464 A1 ist eine Abdichtvorrichtung für einen Kraftstoffleitungsanschluss bekannt. Die bekannte Abdichtvorrichtung weist ein Anschlusselement einer Kraftstoffleitung und ein Aufnahmeelement für dieses Anschlusselement auf. Hierbei ist außerdem eine Dichtelementhülse vorgesehen, die zwischen dem Anschlusselement und dem Aufnahmeelement angeordnet ist. Das Anschlusselement besitzt ein Kugelelement mit einem axialen Durchlasskanal.

Die aus der DE 10 2007 019 464 A1 bekannte Abdichtvorrichtung hat den Nachteil, dass das zusätzliche Bauteil in Form der Dichtelementhülse erforderlich ist, um die hydraulische Abdichtung zwischen dem Aufnahmeelement und dem Anschlusselement zu realisieren. Dies führt auch zu einem höheren Aufwand bei einer Montage.

Eine Verbindungsanordnung nach dem Oberbegriff des Anspruchs 1 ist aus der DE 10 2005 045 731 A bekannt.

### Offenbarung der Erfindung

Die erfindungsgemäße Verbindungsanordnung mit den Merkmalen des Anspruchs 1 hat den Vorteil, dass eine verbesserte Funktionsweise ermöglicht ist. Speziell können hohe Anforderungen bezüglich einer Dichtheit und/oder einer Robustheit mit einem reduzierten Aufwand erreicht werden.

Durch die in den Unteransprüchen aufgeführten Maßnahmen sind vorteilhafte Weiterbildungen der im Anspruch 1 angegebenen Verbindungsanordnung möglich.

Die Verbindungsanordnung kann speziell für Brennstoffeinspritzsysteme an einer Brennkraftmaschine (Verbrennungsmotor) zum Einsatz kommen. Hierbei können typische hydraulische Komponenten, wie zum Beispiel Pumpen, Druckspeicher und Einspritzventile, über Hydraulikleitungen miteinander verbunden werden. Solche Hydraulikleitungen können aus Rohrhalbzeugen hergestellt werden, an deren Enden geeignete Dichtgeometrien, typischerweise in Kugelform oder kugelähnlicher Form, im Bereich der Dichtstelle angebracht sind. Der Verbindungspartner, der an einer Hydraulikkomponente vorgesehen ist, kann typischerweise eine Kegelgeometrie zur Verfügung stellen. Somit kann an einem Verbindungspartner ein Verbindungselement mit der konvex gebogenen Verbindungsfläche ausgestaltet sein, und an dem anderen Verbindungspartner kann das Verbindungsstück mit der zumindest näherungsweise kegelförmigen Anlagefläche ausgestaltet sein. Die Schnittstelle kann beispielsweise durch ein als Überwurfmutter ausgestaltetes Spannelement vorgespannt werden. Die eigentliche Abdichtung erfolgt dann an einer sich ergebenden Dichtfläche zwischen der konvex gebogenen Verbindungsfläche des Verbindungselements und der zumindest näherungsweise kegelförmigen Anlagefläche des Verbindungsstücks. Die als Dichtfläche dienende, realisierte Kontaktfläche bildet sich hierbei vorzugsweise bei der Erstmontage durch plastische Verformung aus, wobei die plastische Verformung vorzugsweise im Wesentlichen nur an einem Verbindungspartner, nämlich entweder dem Verbindungselement oder dem Verbindungsstück, auftritt. Dies wird zum Beispiel über die Vorgabe der unterschiedlichen Härten ermöglicht.

Die Dichtfläche (Kontaktfläche) entsteht durch die lokal hohe Flächenpressung aufgrund der vorzugsweise axialen Vorspannung und kann somit durch plastische Verformung in der Kontaktstelle erreicht werden, wobei lokale Form- und Oberflächenfehler ausgeglichen und somit die Dichtheit sichergestellt wird. Die plastische Verformung setzt sich hierbei in der Regel von der Kontaktstelle in das Grundmaterial fort.

Als zum Einsatz kommende Werkstoffe eignen sich besonders metallische Werkstoffe, die angepasst an die Einsatzbedingungen aus verschiedenen Werkstoffklassen gewählt werden können. Insbesondere eignen sich korrosionsbeständige Stähle wie Austenite oder Duplex-Stähle, aber auch Kohlenstoffstähle, wie z.B. ein C15-Stahl. Hierbei wird die Material- beziehungsweise Werkstoffpaarung so gewählt, dass die gewünschte plastische Verformung realisiert werden kann. Dies hat den Vorteil, dass eine kostenintensive Steigerung der Qualität der Einzelteile bezüglich einer Oberflächengüte, einer Formabweichung und dergleichen vermieden werden kann. Ferner ist kein weiches Zusatzbauteil zwischen dem Verbindungselement und dem Verbindungsstück zum Ausgleich der Toleranzen und Oberflächenfehler erforderlich. Daher liegt das Verbindungselement in dem Anlagebereich direkt an der zumindest näherungsweise kegelförmigen Anlagefläche des Verbindungsstücks an. Zum Beispiel durch den Einsatz weicher Werkstoffe zur Erreichung der gewünschten Verformung ergibt sich damit eine Möglichkeit, die axiale Vorspannkraft zu begrenzen. Hierdurch kann gegebenenfalls vermieden werden, dass höherfeste, kostenintensivere Werkstoffe zur Übertragung der höheren Spannungen bei gleichen Abmessungen erforderlich sind. Entsprechend bedeutet dies natürlich auch, dass sich bei einem gegebenen Herstellungsaufwand eine verbesserte Dichtwirkung und/oder eine höhere Robustheit der Verbindungsanordnung erzielen lässt. Dadurch können steigende Anforderungen an die Dichtheit und die Robustheit bei gegebenem Herstellungsaufwand erreicht werden.

An dem Verbindungsstück ist ein Außengewinde so ausgebildet, dass ein wirksamer Eingriffsbereich des Außengewindes des Verbindungsstücks, in den ein Gegengewinde zum Beaufschlagen der konvex gebogenen Verbindungsfläche gegen die zumindest näherungsweise kegelförmige Anlagefläche eingreift, bezüglich der Längsachse um einen positiven Längsabstand von dem Anlagebereich beabstandet ist, und der positive Längsabstand ist so bestimmt, dass eine durch ein Beaufschlagen der konvex gebogenen Verbindungsfläche gegen die zumindest näherungsweise kegelförmige Anlagefläche verursachte plastische Verformung des Verbindungsstücks den Eingriff des Gegengewindes in den wirksamen Eingriffsbereichs des Außengewindes nicht beeinträchtigt. Der positive Längsabstand ist hierbei als ein Längsabstand zu verstehen, der größer als Null ist. Hierbei ist es ferner auch von Vorteil, dass der positive Längsabstand so bestimmt ist, dass die durch das Beaufschlagen der konvex gebogenen Verbindungsfläche gegen die zumindest näherungsweise kegelförmige Anlagefläche verursachte plastische Verformung eine geringfügige plastische Verformung des Außengewindes des Verbindungsstücks in dem wirksamen Eingriffsbereich, die den Eingriff des Gegengewindes in den wirksamen Eingriffsbereich des Außengewindes nicht beeinträchtigt, zumindest an einem nach dem positiven Längsabstand beginnenden Anfang des wirksamen Eingriffsbereichs verursacht. Der positive Längsabstand wird daher vorzugsweise so festgelegt, dass es an zumindest einem Teil der Gewindegänge, insbesondere dem ersten Gewindegang, des Außengewindes im Eingriffsbereich noch zu einer geringfügigen plastischen Verformung kommt. Hierdurch kann der positive Längsabstand vergleichsweise klein vorgegeben werden beziehungsweise der wirksame Eingriffsbereich axial vergleichsweise nahe an den Anlagebereich gelegt werden.

Ferner ist es hierbei vorteilhaft, dass das Verbindungsstück entlang der Längsachse zumindest von dem Anlagebereich bis zu dem Anfang des wirksamen Eingriffsbereichs oder von dem Anlagebereich bis in oder über den wirksamen Eingriffsbereich des Außengewindes weicher ausgestaltet ist als das Verbindungselement an seiner konvex gebogenen Verbindungsfläche. Hierbei kann das Verbindungselement aus einem ersten Werkstoff mit einer zumindest näherungsweise homogenen ersten Härte ausgebildet sein, während das Verbindungsstück aus einem zweiten Werkstoff mit einer zumindest näherungsweise homogenen zweiten Härte ausgebildet ist. Dadurch können das Verbindungsstück und das Verbindungselement kostengünstig hergestellt werden. Allerdings sind auch andere Ausgestaltungen denkbar.

Vorteilhaft ist es bei einem Kegelöffnungswinkel (α, "alpha") aus einem Bereich von etwa 30° bis etwa 100°, dass der positive Längsabstand bei einem Nenngewindedurchmessers des Außengewindes des Verbindungsstücks von 10 mm bis 18 mm größer als 0,5 mm, bei einem Nenngewindedurchmesser des Außengewindes des Verbindungsstücks von mehr als 18 mm größer als 1 mm und bei einem Nenngewindedurchmessers des Außengewindes des Verbindungsstücks von weniger als 10 mm größer als 0,2 mm vorgegeben ist. Der positive Längsabstand wird hierbei von der Mitte der sich bei der Erstmontage ergebenden Dichtfläche zwischen der konvex gebogenen Verbindungsfläche des Verbindungselements und der zumindest näherungsweise kegelförmigen Anlagefläche des Verbindungsstücks am Anlagebereich gemessen. Speziell kann der positive Längsabstand bis zu dem Beginn der ersten Windung des Außengewindes des Verbindungsstücks gemessen werden, wenn dort der wirksame Eingriffsbereich beginnt.

Bei einem anderen Kegelöffnungswinkel (α), also von weniger als etwa 30° oder mehr als etwa 100°, sind auch andere Abstände vorteilhaft.

Vorteilhaft ist es auch, dass ein Spannelement vorgesehen ist, an dem das Gegengewinde ausgebildet ist, und dass das Spannelement eine Stützfläche aufweist, über die das Spannelement zum Beaufschlagen der konvex gebogenen Verbindungsfläche gegen die zumindest näherungsweise kegelförmige Anlagefläche zumindest mittelbar das Verbindungselement mit einer über das Gegengewinde an dem wirksamen Eingriffsbereich des Außengewindes des Verbindungsstücks aufgebrachten Vorspannung beaufschlagt. Das Spannelement kann hierbei als Überwurfmutter ausgestaltet sein oder die Funktionsweise einer Überwurfmutter realisieren.

Ferner ist es vorteilhaft, dass zumindest in dem Anlagebereich die Härte des Verbindungselements an seiner konvex gebogenen Verbindungsfläche größer vorgegeben ist als die Härte des Verbindungsstücks an seiner kegelförmigen Anlagefläche. Somit kommt es speziell bei der Erstmontage zu einer plastischen Verformung des Verbindungsstücks an seiner kegelförmigen Anlagefläche. Das Verbindungsstück zeigt dann in vorteilhafter Weise durch die Beaufschlagung der konvex gebogenen Verbindungsfläche gegen die kegelförmige Anlagefläche zumindest im Anlagebereich an seiner kegelförmigen Anlagefläche eine plastische Verformung, die zu einer vorteilhaften Dichtwirkung führt, wenn zumindest in dem Anlagebereich die Härte des Verbindungselements an seiner konvex gebogenen Verbindungsfläche und die Härte des Verbindungsstücks an seiner kegelförmigen Anlagefläche geeignet vorgegeben sind. Speziell wird hierbei ein ausreichender Unterschied zwischen der Härte des Verbindungselements und der Härte des Verbindungsstücks vorgegeben.

Bei einer abgewandelten Ausgestaltung ist es auch möglich, dass zumindest im Anlagebereich die Härte des Verbindungselements an seiner konvex gebogenen Verbindungsfläche kleiner vorgegeben ist wie die Härte des Verbindungsstücks an seiner zumindest näherungsweise kegelförmigen Anlagefläche. Bei dieser Ausgestaltung kommt es dann speziell bei der Erstmontage zu einer plastischen Verformung des Verbindungselements an seiner konvex gebogenen Verbindungsfläche, um die Dichtstelle auszubilden.

Die konvex gebogene Verbindungsfläche des Verbindungselements kann in vorteilhafter Weise als Teil einer Kugelfläche ausgebildet sein. Hierbei kann das Verbindungselement eine Verbindungstulpe aufweisen, die gegen die kegelförmige Anlagefläche des Verbindungsstücks beaufschlagt wird.

Somit kann eine Verbindungsanordnung realisiert werden, mit der eine robustere, kostengünstigere und bauraumoptimierte Lösung für eine Kugel-/Kegelverbindung erreicht wird. Speziell wird dies dadurch erreicht, dass ein weicher Werkstoff (Kegelwerkstoff) für das Verbindungsstück mit einem harten Werkstoff (Kugelwerkstoff) für das Verbindungselement und hohen Vorspannkräften kombiniert werden. Die hieraus resultierende hohe Verformung einerseits führt zu einer sehr guten Abdichtung auch bei großen Toleranzeinflüssen. Die durch die Kegelkonstruktion bedingte plastische Aufweitung eines Stutzens, die von der kegelförmigen Anlagefläche des Verbindungsstücks ausgeht, führt dabei nach der Erstmontage auch zu einer plastischen Deformierung an einer Außenseite des Verbindungsstücks, an dem das Außengewinde vorgesehen ist. Um eine durch die plastische Deformierung mögliche Beschädigung der Schraubverbindung nach der Erstmontage zu vermeiden, werden der Verschraubungsbereich und der Bereich der plastischen Verformung räumlich getrennt. Dadurch kann auch bei einem geringen Außendurchmesser des Verbindungsstücks eine hohe lokale, plastische Verformung akzeptiert werden. Dies ermöglicht einen besonders geringen Materialeinsatz und somit eine besonders kleine Baugröße, was zusätzlich Bauraumvorteile bietet.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
Fig. 1 eine Verbindungsanordnung in einer auszugsweisen, schematischen, axialen Schnittdarstellung entsprechend einem Ausführungsbeispiel der Erfindung und
Fig. 2 den in Fig. 1 mit II bezeichneten Ausschnitt eines Verbindungsstücks der Verbindungsanordnung des Ausführungsbeispiels nach einer Erstmontage im Vergleich zu einer unmodifizierten Ausgestaltung zur Erläuterung der Erfindung.

### Ausführungsformen der Erfindung

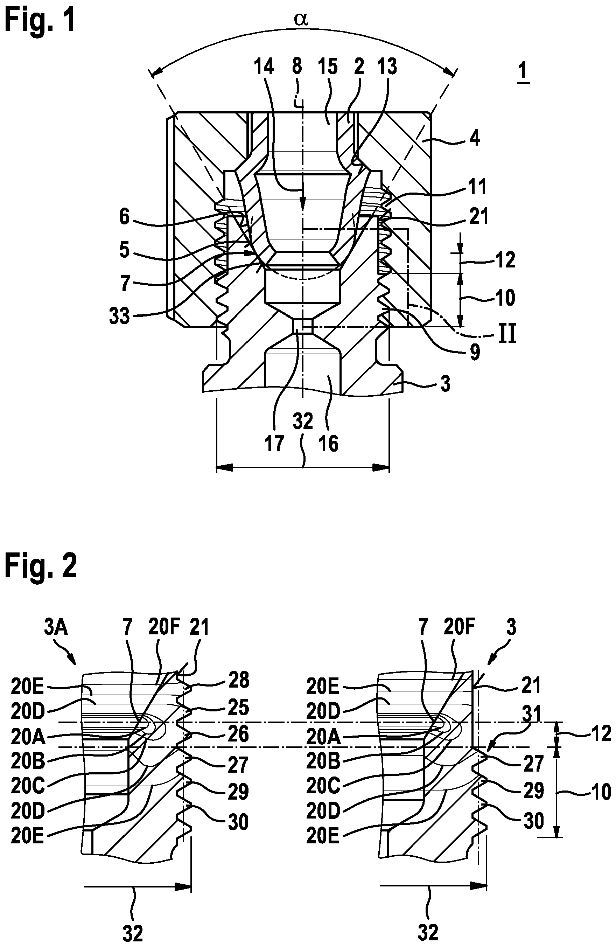

Fig. 1 zeigt eine Verbindungsanordnung 1 in einer auszugsweisen, schematischen Schnittdarstellung entsprechend einem Ausführungsbeispiel. Die Verbindungsanordnung 1 dient zum Ausbilden einer hydraulischen Verbindung zwischen einem Verbindungselement 2 und einem Verbindungsstück 3 der Verbindungsanordnung 1. Hierbei kann die Verbindungsanordnung 1 außerdem ein Spannelement 4 aufweisen, das in diesem Ausführungsbeispiel als Überwurfmutter 4 ausgebildet ist. Speziell kann die Verbindungsanordnung 1 für Einrichtungen an Brennkraftmaschinen dienen. Das Verbindungselement 2 kann hierbei an einer Hydraulikleitung ausgebildet sein. Das Verbindungsstück 3 kann an einer Hydraulikkomponente, wie beispielsweise einer Pumpe, einem Druckspeicher oder einem Brennstoffeinspritzventil, ausgebildet sein. Es sind allerdings auch andere Ausgestaltungen und Anwendungen denkbar.

Das Verbindungselement 2 weist eine konvex gebogene Verbindungsfläche 5 auf. Ferner weist das Verbindungsstück 3 eine kegelförmige Anlagefläche 6 auf. Bei der Montage gelangt die konvex gebogene Verbindungsfläche 5 des Verbindungselements 2 in einem Anlagebereich 7 in direkte Anlage an die kegelförmige Anlagefläche 6. Speziell bei der Erstmontage wird hierbei von dem Spannelement 4 eine Vorspannung aufgebracht, die an dem Anlagebereich 7 zu einer plastischen Verformung führt.

In diesem Ausführungsbeispiel kommt es bei der Erstmontage zu einer plastischen Verformung der kegelförmigen Anlagefläche 6 am Anlagebereich 7. Das Verbindungselement 2 wird hingegen nicht beziehungsweise untergeordnet plastisch verformt. Speziell tritt somit keine beziehungsweise nur eine untergeordnete plastische Verformung des Verbindungselements 2 an seiner konvex gebogenen Verbindungsfläche 5 auf. Hierfür ist eine Härte des Verbindungselements 2 größer vorgegeben als eine Härte des Verbindungsstücks 3.

Somit liegt die konvex gebogene Verbindungsfläche 5 des Verbindungselements 2 in dem Anlagebereich 7 direkt an der zumindest näherungsweise kegelförmigen Anlagefläche 6 des Verbindungsstücks 3 an, wobei zumindest in dem Anlagebereich 7 die Härte des Verbindungselements 2 an seiner konvex gebogenen Verbindungsfläche 5 und die Härte des Verbindungsstücks 3 an seiner zumindest näherungsweise kegelförmigen Anlagefläche 6 unterschiedlich vorgegeben sind. Über das Spannelement 4 wird hierbei die konvex gebogene Verbindungsfläche 5 des Verbindungselements 2 gegen die bezüglich einer Längsachse 8 nach innen orientierte, zumindest näherungsweise kegelförmige Anlagefläche 6 des Verbindungsstücks 3 beaufschlagt.

An dem Verbindungsstück 3 ist ein Außengewinde 9 ausgebildet. Hierbei ist ein wirksamer Eingriffsbereich 10 des Außengewindes 9 des Verbindungsstücks 3 gegeben, in den ein Gegengewinde 11 des Spannelements 4 zum Beaufschlagen der konvex gebogenen Verbindungsfläche 5 gegen die kegelförmige Anlagefläche 6 eingreift.

Bezüglich der Längsachse 8 ist ein positiver Längsabstand 12 vorgegeben, um den der wirksame Eingriffsbereich 10 bezüglich der Längsachse 8 von dem Anlagebereich 7 beabstandet ist. Der positive Längsabstand 12 ist hierbei größer als Null.

Die Bestimmung des positiven Längsabstands 12 ist auch anhand der Fig. 2 näher beschrieben.

Das Spannelement 4 weist eine Stützfläche 13 auf, über die das Spannelement 4 zum Beaufschlagen der konvex gebogenen Verbindungsfläche 5 gegen die kegelförmige Anlagefläche 6 das Verbindungselement 2 mit einer über das Gegengewinde 11 an dem wirksamen Eingriffsbereich 10 des Außengewindes 9 aufgebrachten Vorspannung beaufschlagt. Somit wird das Verbindungselement 2 in einer Richtung 14 entlang der Längsachse 8 mit einer Vorspannkraft gegen die kegelförmige Anlagefläche 6 des Verbindungsstücks 3 beaufschlagt. Die Vorspannung beziehungsweise die Vorspannkraft werden hierbei so groß vorgegeben, dass die gewünschte plastische Verformung des Verbindungsstücks 3 an dem Anlagebereich 7 zur Erzielung der gewünschten Dichtwirkung auftritt.

Das Verbindungselement 2 weist einen Innenraum 15 auf. Ferner weist das Verbindungsstück 3 einen Kanal 16 auf, in dem in diesem Ausführungsbeispiel eine Drosselstelle 17 vorgesehen ist. Durch die zwischen dem Verbindungselement 2 und dem Verbindungsstück 3 an dem Anlagebereich 7 erzielte Abdichtung ist eine hydraulische Verbindung realisiert. Dadurch kann beispielsweise ein hydraulisches Fluid, insbesondere Brennstoff, von dem Innenraum 15 in den Kanal 16 geführt werden. Auf diese Weise kann eine Hydraulikkomponente, an der das Verbindungsstück 3 ausgebildet ist, von dem Verbindungselement 2 mit dem hydraulischen Fluid, insbesondere dem Brennstoff, versorgt werden.

Fig. 2 zeigt den in Fig. 1 mit II bezeichneten Ausschnitt eines Verbindungsstücks 3 der Verbindungsanordnung 1 des Ausführungsbeispiels nach einer Erstmontage im Vergleich zu einer unmodifizierten Ausgestaltung 3A zur Erläuterung der Erfindung. Zur Vereinfachung der Darstellung werden hierbei an dem Verbindungsstück 3 und dem Verbindungsstück 3A soweit wie möglich übereinstimmende Bezugszeichen für sich entsprechende Elemente verwendet. Die Verbindungsstücke 3, 3A sind nach einer ersten Montage dargestellt. Hierbei kann auch eine Rechner gestützte Modellierung mit einer geeigneten Simulationsrechnung zum Einsatz kommen.

An dem als Punkt 7 dargestellten Anlagebereich 7 wird eine Kraft beziehungsweise mechanische Spannung in das Verbindungsstück 3 abhängig von der Axialkraft und dem Kegelöffnungswinkel α eingeleitet. Dadurch ergeben sich mechanische Spannungen und dadurch verursachte plastische Verformungen in dem Verbindungsstück 3. In der Fig. 2 sind Zustände dargestellt, die eine bezüglich der Längsachse 14 radiale bleibende plastische Verformung nach der Erstmontage über Iso-Verformungslinien 20A, 20B, 20C, 20D, 20E, 20F zeigen. Die Iso-Verformungslinien 20A bis 20F sind hierbei nicht notwendigerweise geschlossen. In diesem Fall sind die Iso-Verformungslinien 20D, 20E, 20F im Bereich einer Außenseite 21 beziehungsweise an dem Außengewinde 9 geöffnet.

Durch die Iso-Verformungslinien 20A bis 20F wird die radiale, plastische Verformung illustriert. Hierbei kennzeichnen die Iso-Verformungslinien 20A bis 20F jeweils Orte, an denen gleich große radiale, bleibende Verformungen nach der Erstmontage auftreten. Die größte radiale, bleibende Verformung tritt naturgemäß am Punkt 7 beziehungsweise der Kreislinie am Anlagebereich 7 auf, die durch den Punkt 7 in der Schnittdarstellung der Fig. 2 veranschaulicht ist. An der Iso-Verformungslinie 20A tritt eine vergleichsweise große, aber gegenüber dem Punkt 7 bereits reduzierte plastische Verformung auf. Dementsprechend nimmt die plastische Verformung beim vom Punkt 7 ausgehenden Überschreiten der Iso-Verformungslinien 20A bis 20F immer weiter ab. Der Gradient schneidet hierbei die Iso-Verformungslinien 20A bis 20F am jeweiligen Punkt im rechten Winkel.

Bei der unmodifizierten Ausgestaltung 3A treten an Gewindegängen 25, 26 des Außengewindes 9 die größten plastische Verformungen auf, die zwischen der plastischen Verformung, die der Iso-Verformungslinie 20C entspricht, und der plastischen Verformung, die der Iso-Verformungslinie 20D entspricht, liegen. Diese Verformungen der Gewindegänge 25, 26 sind hierbei so groß, dass der Eingriff des Gegengewindes 11 des Spannelements 4 in das Außengewinde 9 zumindest an den Gewindegängen 25, 26 beeinträchtigt würde. An einem Gewindegang 27 des Außengewindes 9 wird eine geringfügige plastische Verformung des Außengewindes 9 des Verbindungsstücks 3 verursacht, die den Eingriff des Gegengewindes 11 in das Außengewinde 9 nicht beeinträchtigt. Für Gewindegänge 28, 29, 30 ergibt sich keine oder zumindest kaum eine plastische Verformung.

Ausgehend von der unmodifizierten Ausgestaltung 3A wird daher der positive Längsabstand 12 so festgelegt, dass der wirksame Eingriffsbereich 10 die Gewindegänge 27, 29, 30 umfasst. Die Gewindegänge 25, 26 werden somit ausgeschlossen. Ferner wird auch der Gewindegang 28 ausgeschlossen, wodurch sich bis zu dem nun ersten Gewindegang 27 des wirksamen Eingriffsbereichs 10 des Außengewindes 9 des Verbindungsstücks 3 eine zylindermantelförmige Außenseite 21 ergibt. Die verbleibenden Gewindegänge 27, 29, 30 sind dann im Rahmen der tolerierbaren Toleranz auch nach der plastischen Verformung mit einer gleichmäßigen Gewindesteigung ausgestaltet.

Somit kann in diesem Ausführungsbeispiel an einem Anfang 31 des wirksamen Eingriffsbereichs 10, der nach dem positiven Längsabstand 12 beginnt, eine geringfügige plastische Verformung des Außengewindes 9 bestehen. Der benötigte Umfang beziehungsweise die benötigte Anzahl an Gewindegängen im Bereich 10, die bei dem in der Fig.2 rechts dargestellten Verbindungsstück 3 verbleibt und von denen hier zur Veranschaulichung die Gewindegänge 27, 29, 30 gekennzeichnet sind, wird abhängig von der zu übertragenden Axialkraft entlang der Achse 8 festgelegt. In diesem Ausführungsbeispiel verbleiben ausgehend vom Anfang 31 und von dem positiven Längsabstand weggehend die Gewindegänge 27, 29, 30 etc.

Das Verbindungsstück 3 ist in diesem Ausführungsbeispiel mit einer homogenen Härte und insgesamt weicher ausgestaltet als das Verbindungselement 2. Ferner kann das Verbindungselement 2 mit einer homogenen Härte ausgestaltet sein, die größer ist als die Härte des Verbindungsstücks 3.

Der positive Längsabstand 12 kann außerdem über einen Nenngewindedurchmesser (Nenndurchmesser, Außendurchmesser) 32 bestimmt werden. Eine vorteilhafte Festlegung kann in folgender Weise erfolgen. Bei einem Nenngewindedurchmesser 32 von 10 mm bis 18 mm wird der positive Längsabstand 12 größer als 0,5 mm festgelegt. Bei einem Nenngewindedurchmesser 32 des Außengewindes 9 von mehr als 18 mm wird der positive Längsabstand 12 größer als 1 mm festgelegt und bei einem Nenngewindedurchmesser 32 des Außengewindes 9 von weniger als 10 mm wird der positive Längsabstand 12 größer als 0,2 mm vorgegeben. Somit sind in Bezug auf verschiedene Nenngewindedurchmesser 32 Untergrenzen für den positiven Längsabstand 12 bestimmt. Dadurch ergibt sich eine einfache Möglichkeit zur Festlegung des positiven Längsabstands 12.

Die konvex gebogene Verbindungsfläche 5 des Verbindungselements 2 kann speziell als Teil einer Kugelfläche 33 ausgebildet sein. Hierbei ist die konvex gebogene Verbindungsfläche 5 gegebenenfalls auch außerhalb des sich bildenden Dichtbereichs (Auflagebereich 7), jedoch zumindest innerhalb des Auflagebereichs 7 als Teil dieser Kugelfläche 33 ausgebildet.

Somit kann das Außengewinde 9, das als Befestigungsgewinde 9 für das Verbindungsstück 3 dient, soweit vom plastischen Einflussbereich verschoben werden, dass keine kritische plastische Verformung mehr im wirksamen Eingriffsbereich 10 vorliegt. Hierbei muss nicht notwendigerweise eine zylindermantelförmige Außenseite 21 realisiert werden. Gegebenenfalls können die Gewindegänge 25, 26, 28 auch nur teilweise abgetragen sein.

Die Erfindung ist nicht auf die beschriebenen Ausführungsbeispiele beschränkt.

## Patentansprüche

1. Verbindungsanordnung (1), die insbesondere zum Ausbilden einer hydraulischen Verbindung an Einrichtungen für Brennkraftmaschinen dient, mit einem Verbindungselement (2) und einem Verbindungsstück (3), wobei zum Ausbilden einer hydraulischen Verbindung eine konvex gebogene Verbindungsfläche (5) des Verbindungselements (2) gegen eine bezüglich einer Längsachse nach innen orientierte, zumindest näherungsweise kegelförmige Anlagefläche (6) des Verbindungsstücks (3) beaufschlagbar ist,
wobei die konvex gebogene Verbindungsfläche (5) des Verbindungselements (2) in einem Anlagebereich (7) direkt an der zumindest näherungsweise kegelförmigen Anlagefläche (6) des Verbindungsstücks (3) anliegt und dass zumindest in dem Anlagebereich (7) eine Härte des Verbindungselements (2) an seiner konvex gebogenen Verbindungsfläche (5) und eine Härte des Verbindungsstücks (3) an seiner zumindest näherungsweise kegelförmigen Anlagefläche (6) unterschiedlich vorgegeben sind,
**dadurch gekennzeichnet,**
**dass** an dem die kegelförmige Anlagefläche (6) aufweisenden Verbindungsstück (3) ein Außengewinde (9) so ausgebildet ist, dass ein wirksamer Eingriffsbereich (10) des Außengewindes (9) des Verbindungsstücks (3), in den ein Gegengewinde (11) zum Beaufschlagen der konvex gebogenen Verbindungsfläche (5) gegen die zumindest näherungsweise kegelförmige Anlagefläche (6) eingreift, bezüglich der Längsachse (8) um einen positiven Längsabstand (12) von dem Anlagebereich (7) beabstandet ist, und dass der positive Längsabstand (12) so bestimmt ist, dass eine durch ein Beaufschlagen der konvex gebogenen Verbindungsfläche (5) gegen die zumindest näherungsweise kegelförmige Anlagefläche (6) verursachte plastische Verformung des Verbindungsstücks (3) den Eingriff des Gegengewindes (11) in den wirksamen Eingriffsbereich (10) des Außengewindes (9) nicht beeinträchtigt.

2. Verbindungsanordnung nach Anspruch 1,
**dadurch gekennzeichnet,**
**dass** der positive Längsabstand (12) so bestimmt ist, dass die durch das Beaufschlagen der konvex gebogenen Verbindungsfläche (5) gegen die zumindest näherungsweise kegelförmige Anlagefläche (6) verursachte plastische Verformung eine geringfügige plastische Verformung des Außengewindes (9) des Verbindungsstücks (3) in dem wirksamen Eingriffsbereich (10), die den Eingriff des Gegenwindes (11) in den wirksamen Eingriffsbereich (10) des Außengewindes (9) nicht beeinträchtigt, zumindest an einem nach dem positiven Längsabstand (12) beginnenden Anfang (31) des wirksamen Eingriffsbereichs (10) verursacht.

3. Verbindungsanordnung nach Anspruch 2,
**dadurch gekennzeichnet,**
**dass** das Verbindungsstück (3) entlang der Längsachse (8) zumindest von dem Anlagebereich (7) bis zu dem Anfang (31) des wirksamen Eingriffsbereichs (10) des Außengewindes (9) weicher ausgestaltet ist als das Verbindungselement (2) an seiner konvex gebogenen Verbindungsfläche (5).

4. Verbindungsanordnung nach einem der Ansprüche 1 bis 3,
**dadurch gekennzeichnet,**
**dass** ein Kegelöffnungswinkel (α) der zumindest näherungsweise kegelförmigen Anlagefläche (6) aus einem Bereich von etwa 30° bis etwa 100° gewählt ist und
**dass** der positive Längsabstand (12) bei einem Nenngewindedurchmesser (32) des Außengewindes (9) des Verbindungsstücks (3) von 10 mm bis 18 mm größer als 0,5 mm, bei einem Nenngewindedurchmesser (32) des Außengewindes (9) des Verbindungsstücks (3) von mehr als 18 mm größer als 1 mm und bei einem Nenngewindedurchmesser (32) des Außengewindes (9) des Verbindungsstücks (3) von weniger als 10 mm größer als 0,2 mm vorgegeben ist.

5. Verbindungsanordnung nach einem der Ansprüche 1 bis 4,
**dadurch gekennzeichnet,**
**dass** ein Spannelement (4) vorgesehen ist, an dem das Gegengewinde (11) ausgebildet ist, und dass das Spannelement (4) eine Stützfläche (13) aufweist, über die das Spannelement (4) zum Beaufschlagen der konvex gebogenen Verbindungsfläche (5) des Verbindungselements (2) gegen die zumindest näherungsweise kegelförmige Anlagefläche (6) des Verbindungsstücks (3) zumindest mittelbar das Verbindungselement (2) mit einer über das Gegengewinde (11) an dem wirksamen Eingriffsbereich (10) des Außengewindes (9) des Verbindungsstücks (3) aufgebrachten Vorspannung beaufschlagt.

6. Verbindungsanordnung nach einem der Ansprüche 1 bis 5,
**dadurch gekennzeichnet,**
**dass** zumindest in dem Anlagebereich (7) die Härte des Verbindungselements (2) an seiner konvex gebogenen Verbindungsfläche (5) größer vorgegeben ist als die Härte des Verbindungsstücks (3) an seiner zumindest näherungsweise kegelförmigen Anlagefläche (6).

7. Verbindungsanordnung nach Anspruch 1,
**dadurch gekennzeichnet,**
**dass** zumindest in dem Anlagebereich (7) die Härte des Verbindungselements (2) an seiner konvex gebogenen Verbindungsfläche (5) kleiner vorgegeben ist wie die Härte des Verbindungsstücks (3) an seiner zumindest näherungsweise kegelförmigen Anlagefläche (6).

8. Verbindungsanordnung nach einem der Ansprüche 1 bis 7,
**dadurch gekennzeichnet,**
**dass** das Verbindungselement (2) aus einem ersten Werkstoff mit einer zumindest näherungsweise homogenen ersten Härte ausgebildet ist und/oder dass das Verbindungsstück (3) aus einem zweiten Werkstoff mit einer zumindest näherungsweise homogenen zweiten Härte ausgebildet ist.

9. Verbindungsanordnung nach einem der Ansprüche 1 bis 8,
**dadurch gekennzeichnet,**
**dass** die konvex gebogene Verbindungsfläche (5) des Verbindungselements (2) als Teil einer Kugelfläche (33) ausgebildet ist.

## Claims

1. Connecting arrangement (1) which serves, in particular, for configuring a hydraulic connection to devices for internal combustion engines, having a connecting element (2) and a connecting piece (3), it being possible, in order to configure a hydraulic connection, for a convexly curved connecting face (5) of the connecting element (2) to be loaded against an at least approximately conical bearing face (6) of the connecting piece (3), which bearing face (6) is oriented towards the inside with regard to a longitudinal axis, the convexly curved connecting face (5) of the connecting element (2) bearing in a bearing region (7) directly against the at least approximately conical bearing face (6) of the connecting piece (3), and in that, at least in the bearing region (7), a hardness of the connecting element (2) on its convexly curved connecting face (5) and a hardness of the connecting piece (3) on its at least approximately conical bearing face (6) are of different specification, **characterized in that** an external thread (9) is configured on the connecting piece (3) which has the conical bearing face (6), in such a way that an effective engagement region (10) of the external thread (9) of the connecting piece (3), into which engagement region (10) a counter-thread (11) engages in order to load the convexly curved connecting face (5) against the at least approximately conical bearing face (6), is spaced apart from the bearing region (7) by a positive longitudinal spacing (12) with regard to the longitudinal axis (8), and **in that** the positive longitudinal spacing (12) is defined in such a way that a plastic deformation of the connecting piece (3), which plastic deformation is caused by way of the loading of the convexly curved connecting face (5) against the at least approximately conical bearing face (6), does not impair the engagement of the counter-thread (11) into the effective engagement region (10) of the external thread (9) .

2. Connecting arrangement according to Claim 1, **characterized in that** the positive longitudinal spacing (12) is defined in such a way that the plastic deformation which is caused by way of the loading of the convexly curved connecting face (5) against the at least approximately conical bearing face (6) causes a slight plastic deformation of the external thread (9) of the connecting piece (3) in the effective engagement region (10) at least at a start (31) of the effective engagement region (10), which start (31) begins after the positive longitudinal spacing (12), which slight plastic deformation does not impair the engagement of the counter-thread (11) into the effective engagement region (10) of the external thread (9).

3. Connecting arrangement according to Claim 2, **characterized in that** the connecting piece (3) is of soft configuration along the longitudinal axis (8) at least from the bearing region (7) as far as the start (31) of the effective engagement region (10) of the external thread (9) than the connecting element (2) on its convexly curved connecting face (5).

4. Connecting arrangement according to one of Claims 1 to 3, **characterized in that** a cone opening angle (α) of the at least approximately conical bearing face (6) is selected from a range of from approximately 30° to approximately 100°, and
**in that** the positive longitudinal spacing (12) is specified to be greater than 0.5 mm in the case of a nominal thread diameter (32) of the external thread (9) of the connecting piece (3) of from 10 mm to 18 mm, is specified to be greater than 1 mm in the case of a nominal thread diameter (32) of the external thread (9) of the connecting piece (3) of more than 18 mm, and is specified to be greater than 0.2 mm in the case of a nominal thread diameter (32) of the external thread (9) of the connecting piece (3) of less than 10 mm.

5. Connecting arrangement according to one of Claims 1 to 4, **characterized in that** a tensioning element (4) is provided, on which the counter-thread (11) is configured, and **in that** the tensioning element (4) has a supporting face (13), via which, in order to load the convexly curved connecting face (5) of the connecting element (2) against the at least approximately conical bearing face (6) of the connecting piece (3), the tensioning element (4) loads the connecting element (2) at least indirectly with a prestress which is applied via the counter-thread (11) on the effective engagement region (10) of the external thread (9) of the connecting piece (3).

6. Connecting arrangement according to one of Claims 1 to 5, **characterized in that**, at least in the bearing region (7), the hardness of the connecting element (2) on its convexly curved connecting face (5) is specified to be greater than the hardness of the connecting piece (3) on its at least approximately conical bearing face (6) .

7. Connecting arrangement according to Claim 1, **characterized in that**, at least in the bearing region (7), the hardness of the connecting element (2) on its convexly curved connecting face (5) is specified to be smaller than the hardness of the connecting piece (3) on its at least approximately conical bearing face (6).

8. Connecting arrangement according to one of Claims 1 to 7, **characterized in that** the connecting element (2) is configured from a first material with an at least approximately homogeneous first hardness, and/or **in that** the connecting piece (3) is configured from a second material with an at least approximately homogeneous second hardness.

9. Connecting arrangement according to one of Claims 1 to 8, **characterized in that** the convexly curved connecting face (5) of the connecting element (2) is configured as part of a spherical face (33).

## Revendications

1. Agencement de liaison (1), qui sert notamment à créer une liaison hydraulique au niveau de dispositifs pour des moteurs à combustion interne, comprenant un élément de liaison (2) et une pièce de liaison (3), une surface de liaison de courbure convexe (5) de l'élément de liaison (2) pouvant être sollicitée contre une surface d'appui (6) au moins approximativement conique de la pièce de liaison (3), orientée vers l'intérieur par rapport à un axe longitudinal, afin de réaliser une liaison hydraulique, la surface de liaison de courbure convexe (5) de l'élément de liaison (2) s'appliquant dans une région d'appui (7) directement contre la surface d'appui (6) au moins approximativement conique de la pièce de liaison (3) et en ce qu'au moins dans la région d'appui (7), une dureté de l'élément de liaison (2) au niveau de sa surface de liaison de courbure convexe (5) et une dureté de la pièce de liaison (3) au niveau de sa surface d'appui (6) au moins approximativement conique sont prédéfinies de manière à être différentes,
**caractérisé en ce que**,
au niveau de la pièce de liaison (3) présentant la surface d'appui (6) conique, est réalisé un filetage extérieur (9) de telle sorte qu'une région d'engagement active (10) du filetage extérieur (9) de la pièce de liaison (3), dans laquelle s'engage un filetage conjugué (11) pour solliciter la surface de liaison de courbure convexe (5) contre la surface d'appui (6) au moins approximativement conique, est espacée de la région d'appui (7) par rapport à l'axe longitudinal (8) d'une distance longitudinale positive (12), et **en ce que** la distance longitudinale positive (12) est définie de telle sorte qu'une déformation plastique de la pièce de liaison (3) provoquée par une sollicitation de la surface de liaison de courbure convexe (5) contre la surface d'appui (6) au moins approximativement conique, n'affecte pas négativement l'engagement du filetage conjugué (11) dans la région d'engagement active (10) du filetage extérieur (9) .

2. Agencement de liaison selon la revendication 1,
**caractérisé en ce que**
la distance longitudinale positive (12) est définie de telle sorte que la déformation plastique provoquée par la sollicitation de la surface de liaison de courbure convexe (5) contre la surface d'appui (6) au moins approximativement conique provoque une légère déformation plastique du filetage extérieur (9) de la pièce de liaison (3) dans la région d'engagement active (10) qui n'affecte pas l'engagement du filetage conjugué (11) dans la région d'engagement active (10) du filetage extérieur (9), au moins au niveau d'un début (31) de la région d'engagement active (10) commençant après la distance longitudinale positive (12).

3. Agencement de liaison selon la revendication 2,
**caractérisé en ce que**
la pièce de liaison (3) le long de l'axe longitudinal (8) au moins de la région d'appui (7) jusqu'au début (31) de la région d'engagement active (10) du filetage extérieur (9) est réalisée de manière plus tendre que l'élément de liaison (2) au niveau de sa surface de liaison de courbure convexe (5).

4. Agencement de liaison selon l'une quelconque des revendications 1 à 3,
**caractérisé en ce**
**qu'**un angle d'ouverture de cône (α) de la surface d'appui (6) au moins approximativement conique est choisi dans une plage d'environ 30° à environ 100° et
en ce que la distance longitudinale positive (12), pour un diamètre de filetage nominal (32) du filetage extérieur (9) de la pièce de liaison (3) de 10 mm à 18 mm, est supérieure à 0,5 mm, pour un diamètre de filetage nominal (32) du filetage extérieur (9) de la pièce de liaison (3) de plus de 18 mm, est supérieure à 1 mm, et pour un diamètre de filetage nominal (32) du filetage extérieur (9) de la pièce de liaison (3) inférieur à 10 mm, est supérieure à 0,2 mm.

5. Agencement de liaison selon l'une quelconque des revendications 1 à 4,
**caractérisé en ce**
**qu'**un élément de serrage (4) est prévu, au niveau duquel est réalisé le filetage conjugué (11) et en ce que l'élément de serrage (4) présente une surface d'appui (13) par le biais de laquelle l'élément de serrage (4), pour solliciter la surface de liaison de courbure convexe (5) de l'élément de liaison (2) contre la surface d'appui (6) au moins approximativement conique de la pièce de liaison (3), sollicite au moins indirectement l'élément de liaison (2) avec une précontrainte appliquée par le biais du filetage conjugué (11) sur la région d'engagement active (10) du filetage extérieur (9) de la pièce de liaison (3).

6. Agencement de liaison selon l'une quelconque des revendications 1 à 5,
**caractérisé en ce**
**qu'**au moins dans la région d'appui (7), la dureté de l'élément de liaison (2) au niveau de sa surface de liaison de courbure convexe (5) est supérieure à la dureté de la pièce de liaison (3) au niveau de sa surface d'appui (6) au moins approximativement conique.

7. Agencement de liaison selon la revendication 1,
**caractérisé en ce**
**qu'**au moins dans la région d'appui (7), la dureté de l'élément de liaison (2) au niveau de sa surface de liaison de courbure convexe (5) est inférieure à la dureté de la pièce de liaison (3) au niveau de sa surface d'appui (6) au moins approximativement conique.

8. Agencement de liaison selon l'une quelconque des revendications 1 à 7,
**caractérisé en ce que**
l'élément de liaison (2) est réalisé en un premier matériau ayant une première dureté au moins approximativement homogène et/ou **en ce que** la pièce de liaison (3) est réalisée en un deuxième matériau ayant une deuxième dureté au moins approximativement homogène.

9. Agencement de liaison selon l'une quelconque des revendications 1 à 8,
**caractérisé en ce que**
la surface de liaison de courbure convexe (5) de l'élément de liaison (2) est réalisée sous forme de partie d'une surface conique (33).
